# EUROPÄISCHE PATENTANMELDUNG

(11) **EP 4 050 316 A1**
(43) Veröffentlichungstag der Anmeldung: **31.08.2022**
(21) Anmeldenummer: 21158959.3
(22) Anmeldetag: 24.02.2021
(51) Int. Cl.: G01N 1/06, B01L 3/00, G01N 1/36, G01N 1/30

(54) **VERFAHREN UND GEGENSTÄNDE ZUR PROBENVERARBEITUNG UND/ODER PROBENKENNZEICHNUNG**

(71) Anmelder: MVZ Prof. Niendorf Pathologie Hamburg-West GmbH, 22767 Hamburg (DE); Braymont AG, 6301 Zug (CH)
(72) Erfinder: NIENDORF, Axel, 22301 Hamburg (DE); UNVERHAU, Jan, 8008 Zürich (CH)
(74) Vertreter: Flügge, Katharina

(57) **Zusammenfassung**

Die vorliegende Erfindung betrifft Verfahren zur Probenverarbeitung und/oder Probenkennzeichnung, Probengefäße, ausgehärtete Einbettmedien, (Proben-)Schnitte und entsprechende Verwendungen.

## Beschreibung

Die vorliegende Erfindung betrifft Verfahren zur Probenverarbeitung und/oder Probenkennzeichnung, Probengefäße, ausgehärtete Einbettmedien, (Proben-)Schnitte und entsprechende Verwendungen.

### Hintergrund der Erfindung

Histologische Gewebeproben (Biopsien) werden mit dem Ziel entnommen, eine Krankheit sicher zu diagnostizieren. Dabei geht es beispielsweise unter anderem um den Nachweis bzw. Ausschluss eines malignen Tumors. Im Falle einer Malignom-Diagnose (z.B. Karzinom) hat dies für den Patienten in der Regel weiterreichende und auch irreversible Konsequenzen. In der täglichen Praxis wird eine Biopsie typischerweise von einem Facharzt mit chirurgischen bzw. endoskopischen Verfahren gewonnen. Grundsätzlich kann jeder Arzt bei entsprechender Indikation Biopsien entnehmen. In der Regel wird eine solche Biopsie dann von demjenigen, der sie entnommen hat, an ein pathologisches Labor verschickt. Hier erfolgt eine weitere Bearbeitung mit dem Ziel, das Gewebe in erster Linie histologisch, d.h. unter dem Mikroskop, oder aber auch mit molekularen Techniken zu analysieren. Diese Untersuchungen werden typischerweise von einem Pathologen vorgenommen.

Im Rahmen des Prozesses der Probenver- und Probenbearbeitung sind eine Reihe von Ablauf-Fehlern möglich, die jeweils für sich genommen dazu führen können, dass Proben verwechselt werden, d.h. insbesondere, dass eine Probe nicht mehr dem Patienten zugeordnet wird, von dem die Probe entnommen worden ist. Dies kann zu dem Resultat führen, dass prinzipiell korrekte Diagnosen gestellt werden, diese jedoch nicht dem entsprechenden Patienten zugeordnet werden, da es zuvor zu der besagten Probenverwechslung gekommen ist. In der medizinischen Fachliteratur sind solche Fehlerquellen systematisch untersucht, z.B. in Kahn, Specimen mislabeling: A significant and costly cause of potentially serious medical errors; 2005; in Nakhleh et al., Mislabeling of Cases, Specimens, Blocks, and Slides; Arch Pathol Lab Med, Vol 135, August 2011, in Tang et al., Patient Safety Issues in Pathology: From Mislabeled Specimens to Interpretation Errors; Vignettes in Patient Safety - Volume 3, September 2018; DOI: 10.5772/intechopen.79634; in Tran et al., Pre-analytical pitfalls: Missing and mislabeled specimens; Cases and Commentaries, February 2020 und in Tozbikian et al., Specimen Identification Errors in Breast Biopsies: Age matters. Report of Two Near-Miss Events and Review of the Literature; Breast J. 2017 September; 23(5): 583-588. doi:10.1111/tbj.12797.

Im Stand der Technik wird bei heutigen Verfahren typischerweise eine Biopsie mit einem geeigneten Instrument dem Patienten entnommen. Diese Biopsie wird dann in ein Gefäß eingebracht in dem sich typischerweise eine Fixations-Flüssigkeit, z.B. Formalin, Glutaraldehyd oder Bouin-Lösung, befindet. Dieses Gefäß wird mit dem Namen des entsprechenden Patienten beschriftet. Parallel wird ein Begleitschein mit dem Namen des Patienten, seinen Koordinaten, mit klinischen Angaben und einer Fragestellung von demjenigen ausgefüllt, der die Probe entnimmt.

An dieser Stelle besteht die erste Fehlermöglichkeit darin, dass die Zuordnung von Probengefäß und Begleitschein nicht korrekt vorgenommen wird. Diese Gefahr ist besonders groß, wenn zeitnah von dem gleichen Untersucher Biopsien bei mehreren Patienten entnommen werden und/oder der Untersucher diese Zuordnung delegiert. Probengefäß und Begleitschein werden zusammen an den Pathologen versandt.

Im Labor des Pathologen wird die Gewebeprobe zunächst entsprechend den Angaben auf dem Begleitschein registriert.

Im nächsten Schritt wird die Probe durch einen Arzt oder medizinisch-technisches Personal in Augenschein genommen und makroskopisch beschrieben. Anschließend werden die Gewebeprobe und der Begleitschein getrennt. Die Gewebeprobe wird in eine sogenannte Kapsel eingebracht, um so prozessiert zu werden, dass sie schlussendlich in ein Einbettmedium, wie z.B. Paraffin, eingebettet werden kann.

Nach der Einbettung in z.B. Paraffin wird die Gewebeprobe typischerweise mit einem entsprechenden Spezialinstrument (Mikrotom) in hauchdünne Scheiben geschnitten ("slicing"), auf einen Objektträger aufgezogen, gefärbt und mit einem Deckglas versehen. Nun kommen die Gewebeprobe und der Begleitschein wieder zusammen. Der gefärbte Schnitt kann nun mikroskopisch untersucht werden, um u.a. eine histo-pathologische Diagnose zu erstellen. Es handelt sich hierbei um ein Standardverfahren, welches in der Fachliteratur detailliert beschrieben und dem Fachmann bekannt ist.

Während der beschriebenen Bearbeitung besteht eine Reihe von weiteren Möglichkeiten der Verwechslung einer solchen Gewebeprobe. Eine Möglichkeit ist zunächst der Schritt, bei dem die Gewebeprobe in eine sogenannte Kapsel eingebracht wird. Diese Kapsel kann eine Beschriftung tragen, welche mit der Kennzeichnung des Begleitschreibens identisch sein sollte. Sollte dies nicht der Fall sein, zum Beispiel weil die Beschriftung der Kapsel nicht korrekt erfolgt ist, bzw. a priori eine "falsche" Kapsel gewählt worden ist, würde dies zu einer Verwechslung führen.

In der heutigen pathologischen Routine ist es üblich, die Kapsel als Träger für den Paraffinblock zu nutzen, in den die Gewebeprobe eingebettet wird. In älteren ebenfalls im Stand der Technik beschriebenen Ausführungen wird der Paraffinblock durch einen kleinen Zettel, der in diesen (d.h. den Paraffinblock) mit eingegossen wird, gekennzeichnet. Hier besteht eine erneute potentielle Fehlerquelle in Analogie zu dem Schritt, bei dem das Gewebe in eine Kapsel eingebracht wird. An der Stelle, an der der Paraffinblock geschnitten wird und dieser Schnitt auf einen Objektträger aufgebracht wird, besteht die nächste Möglichkeit, einen Fehler zu machen und zwar für den Fall, dass die korrekte Zuordnung "histologischer Schnitt - Objektträger" nicht gegeben ist. Auch hier kann, erneut in Analogie zu den oben genannten Fehlermöglichkeiten, eine falsche Beschriftung des Objektträgers bzw. ein Fehlgriff mit der Auswahl eines "falschen" Objektträgers Grund für eine Verwechslung sein.

Das aufgezeigte übliche Verfahren ist dem Fachmann auf diesem Gebiet der Technik hinlänglich bekannt (z. B. aus Remmele W. (1999) Grundlagen der diagnostischen Pathologie an Biopsie und Operationspräparat. In: Remmele W. (eds) Pathologie. Springer, Berlin, Heidelberg oder ROSAI AND ACKERMAN'S Surgical Pathology, tenth edition, volume 1, Autor: Juan Rosai, Verlag: Elsevier Mosby, Seiten 1-95).

Wie aufgezeigt bergen die Verfahren der Probenver- und Probenbearbeitung und/oder Probenkennzeichnung, insbesondere im Bereich der histologischen Gewebeproben, des Standes der Technik den Nachteil von diversen Fehler- und Verwechslungsmöglichkeiten. Aufgabe der vorliegenden Erfindung war es demzufolge, Verfahren und Gegenstände bereitzustellen, die Fehler und Verwechslungsmöglichkeiten bei der Probenver- und Probenbearbeitung, sowie der Probenkennzeichnung, insbesondere von histologischen Gewebeproben, minimieren und bestenfalls ganz verhindern.

### Beschreibung

Die Aufgabe wird durch ein erfindungsgemäßes Verfahren mit den Merkmalen des Anspruchs 1, ein erfindungsgemäßes Gefäß mit den Merkmalen des Anspruchs 6, ein erfindungsgemäßes ausgehärtetes Einbettmedium enthaltend eine Probe mit den Merkmalen des Anspruchs 10, eine erfindungsgemäße Verwendung mit den Merkmalen des Anspruchs 12 und einen erfindungsgemäßen Schnitt mit den Merkmalen des Anspruchs 15 gelöst. Vorteilhafte Ausgestaltungen sind in den Unteransprüchen angegeben.

In einem ersten Aspekt der Erfindung wird erfindungsgemäß bei dem hiermit beanspruchten Verfahren eine Verwechslungsmöglichkeit bei der Probenver- und Probenbearbeitung, sowie der Probenkennzeichnung, insbesondere von histologischen Gewebeproben, minimiert, vorzugsweise verhindert. Um die besagte Verwechslung einer Probe zu vermeiden, wird vorgeschlagen, eine Kennzeichnung (visuelle Identifikation) dieser Probe nicht nur - wie typischerweise im Stand der Technik offenbart - auf einem Gefäß, in dem diese Probe transportiert wird, aufzubringen, sondern auch in das Gefäß bzw. in Verbindung mit der Probe mit einzubringen. Probe und Kennzeichnung sollen so räumlich und zeitlich untrennbar miteinander verbunden sein. Dies setzt voraus, dass die Kennzeichnung ihren Charakter während des gesamten Bearbeitungsprozesses bewahrt. Unter der Bezeichnung "untrennbar miteinander verbunden" soll bei der vorliegenden Erfindung verstanden werden, dass Probe und Kennzeichnung mechanisch miteinander verbunden sind, ggf. über ein Medium, und typischerweise keine zufällige und/oder unbemerkte Trennung erfolgen kann. Es soll hierunter nicht verstanden werden, dass die Verbindung nicht durch Krafteinwirkung getrennt werden könnte.

Die Erfindung betrifft somit in einem ersten Aspekt ein Verfahren zur Probenverarbeitung und/oder Probenkennzeichnung, vorzugsweise zur Probenverarbeitung und/oder Probenkennzeichnung in der Medizin, bevorzugt zur Probenverarbeitung und/oder Probenkennzeichnung von histologischen Gewebeproben, umfassend die Schritte
(a) Einbetten einer Probe, vorzugsweise einer Gewebeprobe, und eines dreidimensionalen Körpers in ein Einbettmedium, vorzugsweise Paraffin oder Methylmethacrylat,
(b) Aushärten des Einbettmediums zu einem Block, und
(c) Durchführen eines Schnittes von dem Block, so dass der Schnitt in Aufsicht einen Schnitt der Probe und einen Schnitt des dreidimensionalen Körpers in Form eines zweidimensionalen Bildes enthält.

Bei der Probe handelt es sich vorzugsweise um eine Gewebeprobe (Biopsie), wobei es sich bevorzugt um eine menschliche oder eine tierische Probe handelt, weiter bevorzugt um eine menschliche Probe, besonders bevorzugt um eine menschliche Gewebeprobe. Weiterhin kann es sich beispielsweise um eine Probe von einem Tumor oder von einem Organ eines Individuums handeln, sowie auch um das komplette Organ. Die Probe ist bevorzugt eine menschliche Probe aus Tumor-Gewebe. Die bevorzugte Probengröße umfasst somit eine Spanne von wenigen Zellen bis zu ganzen Organen. Vorzugsweise hat die Probe eine Größe von 0,1 bis 20 mm im Durchmesser, vorzugsweise 0,3 bis 10 mm im Durchmesser, bevorzugt 0,5 bis 3 mm im Durchmesser. Ein Probe kann jedoch auch ein Länge von 0,5 bis 5 cm, vorzugsweise 0,75 bis 3 cm, bevorzugt 1 bis 2 cm haben.

Die bevorzugte Probengröße ist unter anderem auch von dem Verfahren abhängig, das für die Probengewinnung benutzt wird. Vorzugweise wird eine Probe, die bei einem erfindungsgemäßen Verfahren Anwendung findet, über ein bekanntes Biopsie-Verfahren erhalten. Bekannte Biopsie-Verfahren sind insbesondere Nadelbiopsie-Verfahren, wie Feinnadel-, Stanz- und Vakuumbiopsie-Verfahren, Exzisionsbiopsie-Verfahren, Knipsbiopsie-Verfahren und endoskopische Biopsie-Verfahren.

Die bevorzugte Probengröße ist insbesondere auch so angepasst, dass die handelsüblichen Kapseln verwendet werden können. Ggf. wird die Probe entsprechend zugeschnitten. Handelsübliche Kapseln haben z.B. die Maße von 40 mm x 26 mm mit einer Höhe von 5 mm (wie z.B. Artikelnummer 17950a der Engelbrecht GmbH, Deutschland). Weiter können auch Großflächenkapseln eingesetzt werden, die z.B. die Maße von 75 mm x 52 mm mit einer Höhe von 15 mm haben (wie z.B. Artikelnummer 1714060 der Engelbrecht GmbH, Deutschland).

Das Einbetten der Probe erfolgt vorzugsweise in einer im Stand der Technik bekannten Kapsel, wie z.B. beschrieben in Remmele W. (1999) Grundlagen der diagnostischen Pathologie an Biopsie und Operationspräparat. In: Remmele W. (eds) Pathologie. Springer, Berlin, Heidelberg). Derartige Kapseln werden auch als "Einbettkassetten" bezeichnet. In einer dieser Kapseln durchläuft die Probe erfindungsgemäß Schritt (a) des erfindungsgemäßen Verfahrens, vorzugsweise die sogenannte Einparaffinierung. Der Einparaffinierung bzw. der Einbettung gemäß Schritt (a) des erfindungsgemäßen Verfahrens, kann auch der Schritt einer Entwässerung vorausgehen. Nach Schritt (a) des erfindungsgemäßen Verfahrens kann die Kapsel/Einbettkassette vorzugsweise als Blockunterlage dienen und so in den sogenannten Schnellspannrahmen, mit dem die meisten heutigen Mikrotome versehen sind, eingespannt werden.

In Schritt (c) des erfindungsgemäßen Verfahrens wird der Schnitt vorzugsweise so ausgeführt, dass ein Schnitt mit einer Dicke von 500 µm oder dünner, bevorzugt mit einer Dicke von 250 µm oder dünner, weiter bevorzugt mit einer Dicke von 100 µm oder dünner, besonders bevorzugt mit einer Dicke von 50 µm oder dünner erhalten wird. Ganz besonders bevorzugt wird der Schnitt in Schritt (c) des erfindungsgemäßen Verfahrens so ausgeführt, dass ein Schnitt mit einer Dicke von 0,5 bis 15 µm, vorzugsweise mit einer Dicke von 1 bis 10 µm, bevorzugt mit einer Dicke von 2 bis 5 µm, erhalten wird. Der Schnitt kann vorzugsweise mit einem entsprechenden Spezialinstrument (Mikrotom) durchgeführt werden, so dass sehr dünne Schnitte bzw. "Scheiben" erhalten werden können, insbesondere Schnitte mit einer Dicke von 0,5 bis 10 µm. Schritt c) kann erfindungsgemäß mehrfach hintereinander an demselben Block durchgeführt werden.

Das erfindungsgemäß einzusetzende Einbettmedium ist vorzugsweise ein Medium, das geeignet ist für die Gewebeeinbettung in der Histologie. Das Einbettmedium liegt bevorzugt bei Raumtemperatur im festen Aggregatszustand vor. Vorzugsweise hat das Einbettmedium einen Schmelzpunkt, der zwischen 54°C und 58°C liegt. Bei Schritt (a) des erfindungsgemäßen Verfahrens erfolgt die Einbettung der Probe und des dreidimensionalen Körpers in ein Einbettmedium, das vorzugsweise zuvor über seinen Schmelzpunkt erwärmt worden ist, sodass es bei Schritt (a) in flüssiger Form vorliegt.

Dem Fachmann bekannte Einbettmedien auf der Basis von Paraffin sind zum Beispiel:
- Paraplast^{®} und Paraplast^{®}Plus, wobei es sich um eine Mischung aus hochgereinigtem Paraffin, molekulargewichtsregulierten Polymeren und (bei Paraplast^{®}Plus) einem Zusatz von Dimethylsulfoxid handelt,
- Sasolwachs, wobei es sich um hochgereinigtes Paraffin mit Polymeren handelt, und
- Kliniplast, wobei es sich um ein hochgereinigtes, reines Paraffin handelt.

Im Rahmen der vorliegenden Erfindung wird das Paraffin des Herstellers Sasol Germany GmbH mit einer Schmelztemperatur zwischen 54°C und 56°C bevorzugt als Einbettmedium eingesetzt.

Die Einbettung des dreidimensionalen Körpers und der Probe gemäß Schritt a) erfolgt in vertikaler oder horizontaler Ausrichtung im Verhältnis zu der Position der Probe in dem Einbettmedium. Vorzugsweise steht der dreidimensionale Körper auf seiner Standfläche. In einer bevorzugten Ausführungsform ist der erfindungsgemäß einzusetzende dreidimensionale Körper gekennzeichnet (z.B. mit einer farblich gestalteten Folie, die vor Gebrauch entfernt wird), so dass für den Anwender erkennbar ist, welche der Seiten des Körpers die Seite der Standfläche ist. Der dreidimensionale Körper besitzt gemäß der vorliegenden Erfindung jeweils ein zweidimensionales Bild, vorzugsweise in Form eines Barcodes, bevorzugt in Form eines 2D-Codes, ganz bevorzugt in Form eines QR-Codes, auf zwei gegenüberliegenden Seiten des dreidimensionalen Körpers, wobei die beiden zweidimensionalen Bilder - bei jeweiliger Aufsicht - zueinander spiegelverkehrt sind. Vorzugsweise kann es sich bei einem QR-Code im Rahmen der vorliegenden Erfindung auch um einen Micro QR-Code handeln.

Durch die eindeutige Definition der Standfläche des erfindungsgemäß einzusetzenden dreidimensionalen Körpers wird definiert, dass das zweidimensionale Bild des dreidimensionalen Körpers, das nach Positionierung des Körpers zur Probe in Aufsicht zu erkennen ist, das zweidimensionale Bild ist, das für die Kennzeichnung genutzt wird (und nicht das Spiegelbild, das auf der Standfläche des dreidimensionalen Körpers vorhanden ist). In den weiteren Ausführungen in Bezug auf die vorliegende Erfindung ist unter "dem zweidimensionalen Bild des dreidimensionalen Körpers" das Bild gemeint, das nach Positionierung des dreidimensionalen Körpers in Aufsicht zu erkennen ist (und nicht das Spiegelbild, das auf der Standfläche des dreidimensionalen Körpers vorhanden ist).

In einer weiteren erfindungsgemäßen Ausführungsform ist zumindest eine der Seiten des dreidimensionalen Körpers mit einem zweidimensionalen Bild, vorzugsweise in Form eines Barcodes, bevorzugt in Form eines QR-Codes, mit einer oder mehreren weiteren Schichten ganz oder teilweise überzogen. In einer weiteren erfindungsgemäßen Ausführungsform sind die beiden Seiten des dreidimensionalen Körpers mit den beiden zweidimensionalen Bildern, vorzugsweise in Form eines Barcodes, bevorzugt in Form eines QR-Codes, mit einer oder mehreren weiteren Schichten ganz oder teilweise überzogen.

Der dreidimensionale Körper besitzt gemäß der vorliegenden Erfindung bei der beschriebenen Positionierung in Bezug auf die Probe in jedem seiner Schnitte in der Ebene der x/y-Achse das gleiche zweidimensionale Bild auf der einen Schnittseite bzw. dessen Spiegelbild auf der anderen Schnittseite, vorzugsweise jeweils in Form eines Barcodes, bevorzugt in Form eines QR-Codes, wobei die beiden zweidimensionalen Bilder (Bild und Spiegelbild) den beiden zweidimensionalen Bildern (Bild und Spiegelbild) entsprechen, die auf den zwei gegenüberliegenden Seiten des dreidimensionalen Körpers abgebildet sind.

Das Aushärten des Einbettmediums zu einem Block, vorzugsweise zu einem Paraffin-Block, gemäß Schritt (b) des erfindungsgemäßen Verfahrens erfolgt vorzugsweise bei Raumtemperatur. Mit Raumtemperatur ist typischerweise eine Temperatur zwischen 18 und 23°C, vorzugsweise von 22°C, gemeint.

Der dreidimensionale Körper ist vorzugsweise aus einem robusten Material gefertigt, das geeignet ist, von pathologischen Spezialinstrumenten, wie z.B. einem Mikrotom, geschnitten werden zu können. Das Material des dreidimensionalen Körpers darf die Probe nicht beeinträchtigen und/oder verändern. Weiterhin muss das Material des dreidimensionalen Körpers stabil gegenüber den erfindungsgemäß eingesetzten Einbettmedien und Fixations-Flüssigkeiten, sowie ggf. weiteren einzusetzenden Substanzen (wie z.B. eingesetzte Substanzen bei gängigen Anfärbeverfahren) sein. Vorzugsweise ist das Material des dreidimensionalen Körpers ein Kunststoffmaterial, vorzugsweise auf Polymer-Basis, bevorzugt auf der Basis von Acrylnitril-Butadien-Styrol (ABS), Polymilchsäure (PLA), Acrylnitril-Styrolacrylat (ALS), Polyethylenterephthalat (PET), glykolisiertem Polyester (PETG), Polycarbonat (PC), Hochleistungs-Kunststoffen (wie PEEK, PEKK, ULTEM), Polyamide oder Polypropylen (PP). Weiterhin können ebenfalls Verbundwerkstoffe und hybride Materialien eingesetzt werden.

Dem Fachmann ist bekannt, wie ein dreidimensionaler Körper, der in der vorliegenden Erfindung Anwendung findet, hergestellt werden kann. Zum Beispiel kann ein erfindungsgemäß einzusetzender dreidimensionaler Körper auch per 3-D Druck hergestellt werden. Im 3-D-Druck sind verschiedene Verfahren im Stand der Technik bekannt, z.B. der Filament 3-D-Druck, auch FDM (fused deposition modelling) oder FFF (fused filament fabrication) genannt. Vorzugsweise wird das Material durch das Aufbringen von Schicht auf Schicht auf die Werkebene aufgebaut.

Ein erfindungsgemäß einzusetzender dreidimensionaler Körper, der als zweidimensionales Bild einen QR-Code (oder einen Micro-QR-Code) aufweist, kann vorzugsweise auch wie folgt hergestellt werden: Ein QR-Code besteht aus einer N x N Matrix von Quadraten, die kontraststark - vorzugsweise schwarz und weiß - gefärbt sind, um den optisch auslesbaren QR-Code zu ergeben. Ein entsprechender erfindungsgemäß einzusetzender dreidimensionaler Körper kann produziert werden, indem eine entsprechende Matrix-Schablone ("stencil") von einem Fertigungsroboter mit Kunststoffstäbchen (vorzugsweise schwarze und weiße gemäß dem gewünschten QR-Code) bestückt wird. Dabei entspricht die Länge der Kunststoffstäbchen der Höhe (z-Achse) des erfindungsgemäß einzusetzenden dreidimensionalen Körpers und die Grundfläche der N x N Matrix der x-Achse x der y-Achse des erfindungsgemäß einzusetzenden dreidimensionalen Körpers. Die N x N Kunststoffstäbchen werden miteinander dauerhaft verbunden, vorzugsweise chemisch, mittels Klebstoff und/oder thermisch mittels eines Anschmelzvorganges. Es entsteht ein erfindungsgemäß einzusetzender dreidimensionaler Körper, der in jedem Planarschnitt in der Ebene der x/y-Achse (d. h. in einem Schnitt orthogonal zur z-Achse) dasselbe optische Erscheinungsbild (den QR-Code als Bild und Spiegelbild auf den beiden Schnittflächen eine Scheibe bzw. eines Schnittes des Körpers) aufweist.

Der dreidimensionale Körper dient in der vorliegenden Erfindung als Kennzeichnung bzw. als sogenannter (visueller) Identifikator der Probe.

In einer bevorzugten Ausführungsform ist der dreidimensionale Körper so ausgestaltet, dass ein zweidimensionales Bild, vorzugsweise ein Barcode, bevorzugt ein 2D-Code, besonders bevorzugt ein QR-Code, in den dreidimensionalen Körper eingebracht ist. Der Vorteil eines Barcodes oder eines QR-Codes liegt darin, dass die im Barcode oder QR-Code gespeicherte Information einfach in ein Laborprogramm über ein geeignetes Scangerät eingelesen werden kann. Erfindungsgemäß ist somit insbesondere ein Verfahren nach einem der vorhergehenden Ausführungsformen, bei dem das zweidimensionale Bild, vorzugsweise der Barcode, bevorzugt der QR-Code, des Schnittes, der gemäß Schritt (c) des erfindungsgemäßen Verfahrens erhalten wird, in ein Datenspeicherprogramm eingelesen und gespeichert werden kann. Hierbei erfolgt das Einlesen vorzugsweise über eine App und/oder die Speicherung vorzugsweise auf einer digitalen Plattform, besonders bevorzugt in einer Cloud.

Ein Vorteil der Nutzung eines beschriebenen dreidimensionalen Körpers, insbesondere in einem erfindungsgemäßen Verfahren, besteht darin, dass die Probenkennzeichnung ohne den Bedarf von Energie, z.B. in der Form einer Batterie, erfolgen kann. Weiterhin ist es von Vorteil, dass der Informationsgehalt, der über das zweidimensionale Bild, vorzugsweise über den Barcode, bevorzugt über den QR-Code, unabhängig ist von insbesondere der Schichtdicke des Schnittes, der gemäß Schritt (c) des erfindungsgemäßen Verfahrens erhalten wird.

Der dreidimensionale Körper, der in der vorliegenden Erfindung als Kennzeichnung bzw. als sogenannter (visueller) Identifikator der Probe Anwendung findet, kann in unterschiedlichen geometrischen Formen vorliegen, wie z.B. in Form eines Quaders, eines Würfels, eines Ellipsoids, eines Prismas oder eines Zylinders. Der dreidimensionale Körper weist vorzugsweise eine Länge und eine Breite im Bereich von jeweils 0,1 bis 2,0 cm, vorzugsweise im Bereich von 0,5 bis 1,5 cm, bevorzugt im Bereich von 0,75 bis 1,25 cm, auf. Ganz besonders bevorzugt ist es, wenn zumindest Länge oder Breite, vorzugsweise Länge und Breite, 1,0 cm sind. Der dreidimensionale Körper weist vorzugsweise eine Höhe im Bereich von 0,2 bis 2,0 cm, vorzugsweise im Bereich von 0,2 bis 1,0 cm, bevorzugt im Bereich von 0,2 bis 0,5 cm auf. Dabei ist diejenige Seite bzw. derjenige Abstand die Höhe, die bzw. der die beiden Flächen des Körpers verbindet, auf denen jeweils das zweidimensionale Bild abgebildet ist. Erfindungsgemäß besonders bevorzugt liegt der dreidimensionale Körper in Form eines Quaders vor, wobei vorzugsweise Länge und Breite im Bereich von jeweils 0,2 bis 2,0 cm, vorzugsweise im Bereich von 0,5 bis 1,5 cm, liegen und/oder die Höhe im Bereich von 0,2 bis 2,0 cm, vorzugsweise im Bereich von 0,2 bis 1,0 cm, bevorzugt im Bereich von 0,2 bis 0,5 cm liegt. In einer besonders bevorzugten Ausführungsform hat der dreidimensionale Körper die Maße von 0,2 x 0,2 x 0,4 cm, wobei die Grund- bzw. Standfläche mit 0,2 x 0,2 cm und die Höhe mit 0,4 cm vorliegen. In einer ganz besonders bevorzugten Ausführungsform hat der dreidimensionale Körper die Maße von 0,5 x 0,5 x 0,3 cm, wobei die Grund- bzw. Standfläche mit 0,5 x 0,5 cm und die Höhe mit 0,3 cm vorliegen.

Der dreidimensionale Körper liegt vorzugsweise in Form eines Quaders vor, wobei ein zweidimensionales Bild, vorzugsweise ein Barcode, bevorzugt ein QR-Code, durch z.B. die 3-D-Drucktechnik als 3-D-Objekt in die Höhe ausgebildet ist. Der dreidimensionale Körper der vorliegenden Erfindung ist derart ausgestaltet, dass bei dem Abschneiden von Schichten/Scheiben/Schnitten des Körpers in der x/y-Ebene gleichbleibende Schnitte erhalten werden, wobei bei jedem Schnitt das gleiche zweidimensionale Bild auf der einen Schnittseite bzw. dessen Spiegelbild auf der anderen Schnittseite, vorzugsweise jeweils in Form eines Barcodes, bevorzugt in Form eines QR-Codes, erhalten wird, wobei die beiden zweidimensionalen Bilder (Bild und Spiegelbild) den beiden zweidimensionalen Bildern (Bild und Spiegelbild) entsprechen, die auf den zwei gegenüberliegenden Seiten des dreidimensionalen Körpers abgebildet sind, von dem die Schnitte gemacht werden.

In einer weiter bevorzugten Ausführungsform umfasst das erfindungsgemäße Verfahren die zusätzlichen Schritte
(d) Aufziehen des Schnittes aus Schritt (c) auf einen Träger, vorzugsweise Objektträger, und
(e) Untersuchung, vorzugsweise mikroskopische Untersuchung, des Schnittes auf dem Träger, vorzugsweise Objektträger.

Erfindungsgemäß kann zwischen den Schritten (d) und (e) der Schnitt aus Schritt (c) mit einem Deckgläschen bedeckt werden und ggf. vor der Bedeckung mit dem Deckgläschen nach einer dem Fachmann aus dem Stand der Technik bekannten Anfärbetechnik eingefärbt werden (z.B. ROSAI AND ACKERMAN'S Surgical Pathology, tenth edition, volume 1, Autor: Juan Rosai, Verlag: Elsevier Mosby, Seiten 1-95). Die bekannten Anfärbetechniken umfassen insbesondere Techniken der Histochemie, der Immunohistochemie und der In-Situ-Hydridisierung mit entsprechenden Materialien, Chemikalien, Antikörpern und/oder Sonden. Weiterhin sind dem Fachmann Techniken aus dem Bereich des Infrarot- und Ultraschall-Imaging bekannt.

Weiter bevorzugt ist es, dass der Schnitt aus Schritt (c), nachdem er gemäß Schritt d) auf einen Träger, vorzugsweise Objektträger, aufgezogen worden ist, entparaffiniert wird. Die Entparaffinierung kann z.B. durch Einstellen des Trägers in Xylol erfolgen. Durch das vorherige Aufziehen des Schnittes aus Schritt c) bleiben auch bei einer Entparaffinierung die Kennzeichnung und die Probe räumlich und zeitlich untrennbar miteinander über den Träger verbunden. Nach der Entparaffinierung wird der Träger und damit auch der Schnitt bei vielen Färbungsmethoden über eine absteigende Alkoholreihe in destilliertes Wasser gebracht und in wässrigen Farblösungen gefärbt. Nach der Färbung, die oft aus zahlreichen Schritten besteht (Beizung, Oxydation u. a. Vorbehandlungen; verschiedene Farbstoffe neben- oder nacheinander), wird der Schnitt entwässert und optional mit Kunstharz unter ein Deckgläschen gebracht.

Mit jedem Schnitt gemäß Schritt (c) des erfindungsgemäßen Verfahrens aus einem ausgehärteten Block, vorzugsweise aus einem ausgehärteten Paraffinblock, enthält dieser Schnitt automatisch auch einen Schnitt der Probe, vorzugsweise einer biologischen Gewebeprobe, gemeinsam mit einem Schnitt des dreidimensionalen Körpers, vorzugsweise des einen QR-Code tragenden dreidimensionalen Körpers. Dieser Schnitt gemäß Schritt (c) des erfindungsgemäßen Verfahrens, der somit zwei über die Umgebung des ausgehärteten Einbettmediums, vorzugsweise über die Paraffin-Umgebung, miteinander verbundene Objekte beinhaltet - den Schnitt des dreidimensionalen Körpers, vorzugsweise des QR-Codes, und den Schnitt der Probe, vorzugsweise der Gewebeprobe, - kann nachfolgend auf einen Objektträger gemäß Schritt (d) übertragen werden. Das zweidimensionale Bild des dreidimensionalen Körpers bzw. vorzugsweise der QR-Code, kann nun, vorzugsweise mit einer in einem Mikroskop integrierten Kamera, ausgelesen und optional über eine entsprechende Applikation interpretiert werden. Damit kann die Probe an dieser Stelle zweifelsfrei identifiziert werden.

Weiter bevorzugt ist es, dass das Auslesen statt durch ein modernes digitales Mikroskop durch das Abscannen des zweidimensionalen Bildes des dreidimensionalen Körpers bzw. vorzugsweise des QR-Codes, mit einem handelsüblichen Smartphone und entsprechender Scanning-Technologie (über eine App) erfolgt. Über eine Cloud kann bei dem Auslesen per App bzw. Smartphone eine Verbindung zu einem Datenspeicherprogramm auf einer digitalen Plattform hergestellt werden, so dass die Bearbeitung von einem digitalen Begleitschein bzw. der Druck eines händischen Begleitscheins erfolgen kann.

In einer besonders bevorzugten Ausführungsform umfasst das erfindungsgemäße Verfahren die aufeinanderfolgenden Schritte
(1) Bereithalten eines Probengefäßes enthaltend einen dreidimensionalen Körper mit gekennzeichneter Standfläche und jeweils einem zweidimensionalen Bild auf zwei gegenüberliegenden Seiten des dreidimensionalen Körpers, wobei die beiden zweidimensionalen Bilder - bei jeweiliger Aufsicht - zueinander spiegelverkehrt sind, vorzugsweise Bereithalten eines Probengefäßes, das auf seiner Außenwand eine Kennzeichnung umfasst, die dem zweidimensionalen Bild des dreidimensionalen Körpers entspricht, wobei das Probengefäß optional eine Fixations-Flüssigkeit enthält,
(2) Einbringen einer Probe in das Probengefäß,
(3) optional Verschließen und Versenden des Probengefäßes,
(4) Überführen der Probe und des dreidimensionalen Körpers in eine Vorrichtung, vorzugsweise in eine Kapsel,
(5) optional Entwässern der Probe,
(6) Einbetten der Probe und des dreidimensionalen Körpers in ein Einbettmedium, vorzugsweise Paraffin, so dass der dreidimensionale Körper auf seiner Standfläche stehend angeordnet ist,
(7) Aushärten des Einbettmediums, so dass ein Block entsteht,
(8) Durchführen eines Schnittes von dem Block so dass der Schnitt einen Schnitt der Probe und einen Schnitt des dreidimensionalen Körpers in Form des zweidimensionalen Bildes enthält,
(9) Aufziehen des Schnittes auf einen Objektträger,
(10) optional Entparaffinieren des Schnittes,
(11) optional Anfärben des Schnittes,
(12) optional Entwässern des Schnittes und/oder Hinzufügen eins Kunstharzes,
(13) optional Abdecken des Schnittes mit einem Deckgläschen, und
(14) Identifikation der Probe über Einlesen des zweidimensionalen Bildes und/oder Untersuchung, vorzugsweise mikroskopische Untersuchung, der Probe.

In Schritt (14) kann die Untersuchung auch vor der Identifikation erfolgen. Für die Untersuchung kann es zudem notwendig sein, dass mehrere Schnitte vorliegen müssen, die nach dem beschriebenen Verfahren erhalten worden sind.

Die der Erfindung zugrunde liegende Aufgabe wird weiterhin durch ein Gefäß gemäß Anspruch 6 gelöst. Ein zweiter Aspekt der vorliegenden Erfindung umfasst somit ein Gefäß für die Aufnahme einer Probe, vorzugsweise einer Gewebeprobe, enthaltend einen dreidimensionalen Körper, der so ausgestaltet ist, dass ein zweidimensionales Bild, vorzugsweise ein Barcode, bevorzugt ein QR-Code, in den dreidimensionalen Körper eingebracht ist. Der dreidimensionale Körper entspricht somit einer Kennzeichnung oder anders ausgedrückt einer visuellen Identifikation einer Probe, die in das erfindungsgemäße Gefäß eingebracht wird.

In einer bevorzugten Ausführungsform enthält das erfindungsgemäße Gefäß eine Probe, vorzugsweise eine Gewebeprobe, bevorzugt eine menschliche Gewebeprobe.

Der dreidimensionale Körper, der in dem erfindungsgemäßen Gefäß enthalten ist, dient zur Kennzeichnung einer Probe, die in das Gefäß eingebracht wird. Die Kennzeichnung im Sinne der Erfindung besteht darin, dass ein zweidimensionales Bild, vorzugsweise ein zweidimensionaler QR-Code, so in den dreidimensionalen Körper (auch bezeichnet als visueller Identifikator) eingebracht ist, dass der Körper zusammen mit der Probe prozessiert werden kann, um schließlich auch mit dieser Probe in z.B. Paraffin oder in ein anderes Einbettmedium eingebettet zu werden, wobei nachfolgend durch den Aushärtungsprozess des Paraffins oder eines anderen Einbettmediums die Kennzeichnung und die Probe räumlich und zeitlich untrennbar miteinander in dem ausgehärteten Block vorliegen.

Der dreidimensionale Körper, der in dem erfindungsgemäßen Gefäß enthalten ist, entspricht vorzugsweise zumindest einer der schon beschriebenen Ausführungsformen eines erfindungsgemäß einzusetzenden dreidimensionalen Körpers.

Das Bereitstellen eines erfindungsgemäßen Gefäßes, vorzugsweise gemäß einer der obigen Ausführungsformen, stellt somit einen Schritt dar, in dem Verwechselungen von Proben verringert bzw. vermieden werden.

Um im Sinne der vorliegenden Erfindung eine Verwechslung einer Probe zu vermeiden, erfolgt eine Kennzeichnung dieser Probe mit Hilfe des beschriebenen dreidimensionalen Körpers, vorzugsweise über ein erfindungsgemäßes Verfahren, bevorzugt gemäß einer der bevorzugten Ausführungsformen, wobei zunächst das erfindungsgemäße Gefäß bereit gestellt wird. In dieses erfindungsgemäße Gefäß wird, vorzugsweise durch den Operateur, eine Probe, vorzugsweise Gewebeprobe, eingeführt.

In einer ebenso bevorzugten Ausführungsform besitzt das erfindungsgemäße Gefäß für die Aufnahme einer Probe auf seiner Außenseite eine Kennzeichnung, die dem zweidimensionalen Bild, vorzugsweise dem Barcode, bevorzugt dem QR-Code, des dreidimensionalen Körpers innerhalb des Gefäßes entspricht. Die Kennzeichnung des erfindungsgemäßen Gefäßes auf seiner Außenseite dient der zusätzlichen Absicherung und einer einfachen Probenprozessierung sowie der Überprüfung.

In einer weiter bevorzugten Ausführungsform des erfindungsgemäßen Gefäßes liegt die Kennzeichnung auf der Außenseite des Gefäßes in zweifacher Ausfertigung vor. Die zweite Ausfertigung der Kennzeichnung auf der Außenseite des erfindungsgemäßen Gefäßes kann vorzugsweise von dem Gefäß entfernt werden. Dies kann z.B. dazu dienen, die zweite Ausfertigung auf einen zusätzlichen Begleitschein zu kleben.

Bei einer besonders bevorzugten Ausführungsform des erfindungsgemäßen Gefäßes liegt somit die eine oder mindestens eine Kennzeichnung in Form eines abziehbaren Etiketts, vorzugsweise in Form eines abziehbaren und bevorzugt erneut klebefähigen Etiketts, vor.

Weiter bevorzugt ist eine Ausführungsform des erfindungsgemäßen Gefäßes, bei dem in dem Gefäß zusätzlich eine Fixations-Flüssigkeit, z.B. Formalin, Glutaraldehyd oder Bouin-Lösung, vorliegt.

Ein erfindungsgemäßes Gefäß, vorzugsweise ein erfindungsgemäßes Gefäß mit Fixationsflüssigkeit, kann in der Praxis einem Probeneinsender schon vom pathologischen Labor, das hinterher die Probenprozessierung, vorzugsweise das erfindungsgemäße Verfahren, durchführt, zur Verfügung gestellt werden. Das erfindungsgemäße Gefäß enthält einen dreidimensionalen Körper, der so ausgestaltet ist, dass ein zweidimensionales Bild, vorzugsweise ein Barcode, bevorzugt ein QR-Code, in den dreidimensionalen Körper eingebracht ist, und vorzugsweise eine Fixations-Flüssigkeit, und ist vorzugsweise zusätzlich auf seiner äußeren Oberfläche mit einer Kennzeichnung, in vorzugsweiser zweifacher Ausfertigung, versehen, wobei die Kennzeichnung dem zweidimensionalen Bild, vorzugsweise dem Barcode, bevorzugt dem QR-Code, des dreidimensionalen Körpers, der sich innerhalb des erfindungsgemäßen Gefäßes befindet, entspricht. Vorzugweise liegt die Kennzeichnung auf der Außenseite des erfindungsgemäßen Gefäßes, bevorzugt in zweifacher Ausfertigung, in Form von einem oder zwei Etiketten vor. Diese Etiketten sind vorzugsweise abziehbar und erneut klebefähig.

Mit Hilfe eines erfindungsgemäßen Gefäßes erfolgt eine Kennzeichnung einer Probe somit nicht nur - wie üblicherweise - auf einem (Proben-)Gefäß, in dem die besagte Probe transportiert wird, sondern auch in diesem (Proben-)Gefäß selbst. Die Probe, vorzugsweise die Gewebeprobe, und der dreidimensionale Körper (d.h. die Kennzeichnung) sind so räumlich und zeitlich miteinander verbunden. Dies setzt voraus, dass der dreidimensionale Körper (d.h. die Kennzeichnung) seinen Charakter während des gesamten weiteren Bearbeitungsprozesses bewahren kann.

Der Vorteil eines erfindungsgemäßen Gefäßes liegt darin, dass selbst wenn eine Kennzeichnung auf dem Gefäß z.B. durch Abreißen nicht mehr vorliegen sollte oder die Kennzeichnung z.B. durch die Berührung mit Flüssigkeiten nicht mehr lesbar sein sollte, die Kennzeichnung durch den im Gefäß vorliegenden dreidimensionalen Körper bestehen bleibt. Dies ist besonders dann wichtig, sobald das erfindungsgemäße Gefäß eine Probe enthält, da ansonsten die Information zu der Probe verloren gehen würde und eine korrekte Zuordnung schwierig bis unmöglich und vor allem fehlerbehaftet sein könnte.

Bei der Verwendung des erfindungsgemäßen Gefäßes kann sich ein Einsender einer Probe nun vorzugsweise über ein Einlesen der Kennzeichnung auf der äußeren Oberfläche des Gefäßes, d.h. des zweidimensionalen Bildes, vorzugsweise des Barcodes, bevorzugt des QR-Codes, des dreidimensionalen Körpers, unter Abgleich mit dem zweidimensionalen Bild, vorzugsweise dem Barcode, bevorzugt dem QR-Code, des dreidimensionalen Körpers innerhalb des Gefäßes, ein fallspezifisches Einsendeformular in einer Cloud erstellen und/oder herunterladen. Sofern ein erfindungsgemäßes Gefäß mit einer zweifachen Ausfertigung der Kennzeichnung in Form zumindest eines abziehbaren Etiketts, vorzugsweise in Form eines abziehbaren und erneut klebefähigen Etiketts, auf der Außenseite des Gefäßes vorliegt, kann der Einsender ebenso ein bestehendes Papierformular, z.B. einen Begleitschein, mit dem auf dem Gefäß zur Verfügung gestellten Kennzeichnungs-Etikett versehen. Hierzu wird dieses Etikett in dem Moment, in dem die Probe in das Gefäß eingebracht wird, von dem Gefäß abgezogen und auf das Papierformular bzw. den Begleitschein aufgeklebt.

In beiden Fällen ist die Probe untrennbar mit der Kennzeichnung, vorzugsweise mit dem Barcode, bevorzugt mit dem QR-Code, verbunden, welche bzw. welcher sich in dem Gefäß befindet, und kann fehlerfrei mit dem erstellten Einsendeformular, welches die gleiche Kennzeichnung, vorzugsweise den gleichen Barcode, bevorzugt den gleichen QR-Code, trägt, in Verbindung gebracht werden. Das entsprechende Etikett dient in diesem Fall dem praktischen Handling der Probe bei deren Ankunft im Labor, und der Begleitschein, welcher ebenfalls ein entsprechendes Etikett trägt, gewährleistet hierbei zusätzlich die fehlerfreie Zuordnung zu dem entsprechenden Individuum. Durch die untrennbare Kennzeichnung der Probe über den dreidimensionalen Körper, d.h. über z.B. Barcode oder QR-Code, stellen die auf dem Gefäß zur Verfügung gestellten Kennzeichnungs-Etiketten lediglich eine zusätzliche Absicherung dar. Für eine eindeutige Zuordnung reicht jedoch die untrennbare Kennzeichnung der Probe durch den dreidimensionalen Körper innerhalb des Gefäßes, vorzugsweise durch den Barcode, bevorzugt durch den QR-Code.

Da die Kennzeichnung, vorzugsweise der Bar- oder QR-Code, und die Probe im weiteren Verlauf der Probenprozessierung, vorzugsweise in einem erfindungsgemäßen Verfahren, durch die gemeinsame Einbindung in z.B. einem Paraffin-Block und anschließendem Aufziehen eines Schnittes des Blocks auf einen Objektträger nicht mehr voneinander getrennt werden können, ist sichergestellt, dass gemäß der Erfindung zum Zeitpunkt der eigentlichen Befunderstellung durch den Vergleich der im Schnitt befindlichen und mikroskopisch sichtbaren Kennzeichnung, d.h. durch das zweidimensionale Bild des dreidimensionalen Körpers, mit der entsprechenden Kennzeichnung auf dem Begleitschein bzw. im Laborprogramm oder Praxis-Informations-System eine korrekte Zuordnung von Probe und Individuum, dem die Probe entnommen worden ist, gegeben ist, und der Befund korrekt zugeordnet erfolgen kann.

Weiter umfasst ein dritter Aspekt der vorliegenden Erfindung einen Block aus ausgehärtetem Einbettmedium, enthaltend eine Probe, vorzugsweise eine Gewebeprobe, und eine Kennzeichnung, nämlich einen dreidimensionalen Körper, in vertikaler oder horizontaler Ausrichtung im Verhältnis zu der Probe, wobei die Kennzeichnung bzw. der dreidimensionale Körper so ausgestaltet ist, dass ein zweidimensionales Bild, vorzugsweise ein Barcode, bevorzugt ein QR-Code, in die Kennzeichnung bzw. den dreidimensionalen Körper eingebracht ist.

Bei einer Ausführungsform des erfindungsgemäß ausgehärteten Einbettmediums handelt es sich bei dem ausgehärteten Einbettmedium um Paraffin oder Methylmethacrylat. Das erfindungsgemäß einzusetzende Einbettmedium ist vorzugsweise ein Medium, das geeignet ist für die Gewebeeinbettung in der Histologie. Das Einbettmedium liegt bevorzugt bei Raumtemperatur im festen Aggregatszustand vor. Vorzugsweise hat das Einbettmedium einen Schmelzpunkt, der zwischen 54°C und 58°C liegt. Beispiele von bekannten Einbettmedien, die in dem erfindungsgemäßen Block vorliegen können, sind weiter oben aufgeführt.

Ein vierter Aspekt der vorliegenden Erfindung umfasst die Verwendung eines dreidimensionalen Körpers zur Probenkennzeichnung, vorzugsweise zur Probenkennzeichnung einer Gewebeprobe, bevorzugt in einem erfindungsgemäßen Verfahren, bevorzugt gemäß einer der beschriebenen Ausführungsformen des erfindungsgemäßen Verfahrens.

In einer weiter bevorzugten Ausführungsform der erfindungsgemäßen Verwendung ist der dreidimensionale Körper so ausgestaltet, dass ein zweidimensionales Bild, vorzugsweise ein Barcode, bevorzugt ein QR-Code, in den dreidimensionalen Körper eingebracht ist. Weiter bevorzugt ist der dreidimensionale Körper so ausgestaltet wie gemäß zumindest einer der hierin beschriebenen Ausführungsformen angegeben.

In einer besonders bevorzugten Ausführungsform der erfindungsgemäßen Verwendung eines dreidimensionalen Körpers zur Probenkennzeichnung erfolgt die Probenkennzeichnung dadurch, dass ein Schnitt des dreidimensionalen Körpers in einem Schnitt - vorzugweise in einem Schnitt eines erfindungsgemäßen Blockes aus ausgehärtetem Einbettmedium gemäß einer oben beschriebenen Ausführungsformen - enthaltend weiter einen Schnitt einer Probe, vorzugsweise einer Gewebeprobe, vorliegt, wobei der Schnitt des dreidimensionalen Körpers, ein zweidimensionales Bild abbildet, vorzugsweise einen Barcode, bevorzugt einen QR-Code. Vorzugsweise sind dabei der Schnitt der Probe und der Schnitt des dreidimensionalen Körpers über ein ausgehärtetes Einbettmedium, vorzugsweise über eine Paraffinumgebung, verbunden. Weiter bevorzugt wird der Schnitt, der einen Schnitt des dreidimensionalen Körpers enthält, vorzugsweise über ein erfindungsgemäßes Verfahren nach einer der oben beschriebenen Ausführungsformen erhalten.

Ein fünfter Aspekt der vorliegenden Erfindung umfasst einen Schnitt enthaltend einen Schnitt einer Probe, vorzugsweise einer Gewebeprobe, und einen Schnitt eines dreidimensionalen Körpers, wobei der Schnitt des dreidimensionalen Körpers, ein zweidimensionales Bild abbildet, vorzugsweise einen Barcode, bevorzugt einen QR-Code, wobei der Schnitt der Probe und der Schnitt des dreidimensionalen Körpers über ein ausgehärtetes Einbettmedium, vorzugsweise über eine Paraffinumgebung, verbunden sind, wobei der Schnitt vorzugsweise erhalten worden ist über ein erfindungsgemäßes Verfahren, vorzugsweise gemäß einer der oben beschriebenen Ausführungsformen.

In einer bevorzugten Ausführungsform ist der erfindungsgemäße Schnitt auf einen Träger, vorzugsweise Objektträger, aufgebracht. Weiter bevorzugt ist der erfindungsgemäße Schnitt mit einem Deckgläschen bedeckt. Ebenso bevorzugt ist der erfindungsgemäße Schnitt durch zumindest ein dem Fachmann bekanntes Standardverfahren angefärbt.

Bei dem erfindungsgemäßen Schnitt ist der Schnitt der Probe mit seiner Kennzeichnung, d.h. dem zweidimensionalen Bild, vorzugsweise dem Barcode, bevorzugt dem QR-Code, über das ausgehärtete Einbettmedium, vorzugsweise über die Paraffinumgebung, so verbunden, dass der Schnitt eine Einheit darstellt oder - anders ausgedrückt - in einem Stück vorhanden ist. Ein Schnitt, auf den nach dem Schnitt lediglich nachträglich eine Kennzeichnung aufgebracht worden ist, entspricht nicht einem erfindungsgemäßen Schnitt. Hiermit ist nicht ausgeschlossen, dass ein erfindungsgemäßer Schnitt nicht zusätzlich und/oder nachträglich eine weitere Kennzeichnung aufgebracht bekommen kann.

Bei einem erfindungsgemäßen Schnitt kann aufgrund der Materialeigenschaften der Kennzeichnung ggf. keine sehr feste oder eine leicht lösliche oder gelöste Verbindung zwischen der Kennzeichnung und dem ausgehärteten Einbettmedium vorliegen. Für die Weiterprozessierung und/oder Aufbewahrung des Schnittes, vorzugsweise auch in einem erfindungsgemäßen Verfahren, ist es auch im Sinne der Erfindung, dass der gesamte Schnitt oder Teile davon so behandelt werden können, z.B. mit einer Schutzschicht versehen werden können, dass sich kein Teil des Probenschnittes lösen kann. Erfindungsgemäß kann es weiterhin sein, dass der erfindungsgemäße Schnitt mit einem Kleber behandelt, vorzugsweise besprüht, wird. Dem Fachmann sind geeignete Kleber aus dem Stand der Technik bekannt. Der erfindungsgemäß einzusetzende Kleber darf nicht mit der Anfärbung und/oder der Probe und/oder einem weiteren eingesetzten Bestandteil derart interferieren, dass die spätere Diagnostik negativ beeinflusst wird. Erfindungsgemäß bevorzugte Kleber sind z.B. das Celltexx Eindeckmedium der Engelbrecht GmbH, Deutschland und IPI Pathotape^{®} (vertrieben von der Engelbrecht GmbH, Deutschland). Auch eine derartige Behandlung mit einem Kleber soll die Ablösung von Teilen des Schnittes verhindern. Hiermit soll sichergestellt werden, dass der Schnitt der Probe weiterhin untrennbar mit der Kennzeichnung, vorzugsweise mit dem Barcode, bevorzugt mit dem QR-Code, verbunden ist. Weiterhin kann ggf. hierdurch der erfindungsgemäße Schnitt - und damit auch der darin enthaltende Schnitt der Probe - weiterhin fehlerfrei mit einem erstellten Einsendeformular, welches die gleiche Kennzeichnung, vorzugsweise den gleichen Barcode, bevorzugt den gleichen QR-Code, aufweist, in Verbindung gebracht werden. Die Behandlung mit einem Kleber kann ebenfalls nach einer Entparaffinierung, einer nachfolgenden Färbung und ggf. nachfolgender Entwässerung des Schnittes erfolgen.

### Kurze Beschreibung der Figuren

In den Zeichnungen sind Ausführungsformen der Erfindung schematisch dargestellt. Es zeigen:
Fig. 1 zeigt die schematische Herstellung eines erfindungsgemäßen Gefäßes für die Aufnahme einer Probe.
Fig. 2 zeigt schematisch die Entnahme einer Probe und Überführen in ein erfindungsgemäßes Gefäß.
Fig. 3 zeigt schematisch das Erfassen der Kennzeichnung eines erfindungsgemäßen Gefäßes.
Fig. 4 zeigt schematisch die Übertragung eines digitalen Begleitscheines in eine Cloud.
Fig. 5 zeigt schematisch den Erfassungsvorgang der Kennzeichnung eines erfindungsgemäßen Gefäßes.
Fig. 6 zeigt schematisch die Prozessierung von Probe und dreidimensionalem Körper in ein erfindungsgemäßes ausgehärtetes Einbettmedium.
Fig. 7 zeigt schematisch einen dreidimensionalen Körper und dessen Zerschneidung im Sinne der Erfindung.
Fig. 8 zeigt schematisch die Prozessierung gemäß Schritt (c) des erfindungsgemäßen Verfahrens.
Fig. 9 zeigt schematisch einen erfindungsgemäßen Schnitt auf einem Objektträger.
Fig. 10 zeigt schematisch die elektronische Erfassung des erfindungsgemäßen Schnittes und dessen Speicherung in ein Datenspeicherprogramm auf einer digitalen Plattform in einer Cloud.
Fig. 11 zeigt schematisch die Übertragung der Informationen aus einem Datenspeicherprogramm auf einer digitalen Plattform in einer Cloud an Dritte.

### Detaillierte Beschreibung der Figuren

Weitere Vorteile, Kennzeichen und Merkmale der vorliegenden Erfindung werden bei der nachfolgenden detaillierten Beschreibung der beigefügten Figuren deutlich. Allerdings ist die Erfindung nicht auf diese Figuren beschränkt und nichts darin soll als Einschränkung des Gesamtumfangs der Erfindung angesehen werden.

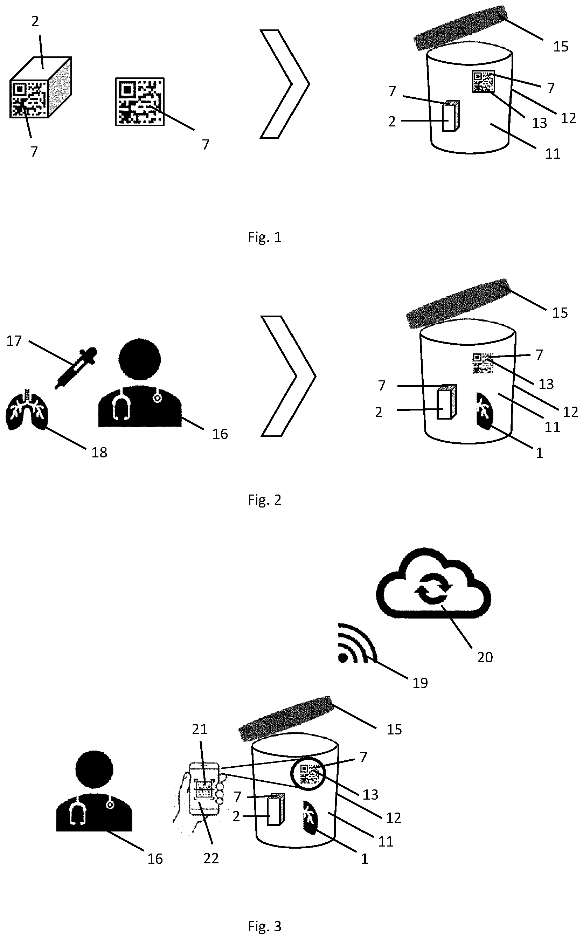

In Fig. 1 wird schematisch die Herstellung eines erfindungsgemäßen Gefäßes (11) für die Aufnahme einer Probe (1) dargestellt. Ein dreidimensionaler Körper (2), der so ausgestaltet ist, dass ein zweidimensionales Bild (7), nämlich ein QR-Code, in den dreidimensionalen Körper (2) eingebracht ist, wird in ein Gefäß (11) bei geöffnetem Deckel (15) eingebracht. Das Gefäß (11) weist auf seiner Außenseite (12) eine Kennzeichnung (13) mit einem zweidimensionalen Bild (7) in Form eines QR-Codes auf, die dem zweidimensionalen Bild (7) bzw. dem QR-Code des dreidimensionalen Körpers (2) innerhalb des Gefäßes (11) entspricht.

In Fig. 2 wird schematisch die Entnahme einer Probe (1) und dessen Überführung in ein erfindungsgemäßes Gefäß (11) gezeigt. Ein Arzt oder Operateur (16) entnimmt mit einem Entnahmegerät (17) aus einem Gewebe (18) eine Probe (1) und überführt sie über den geöffneten Deckel (15) in das erfindungsgemäße Gefäß (11) gemäß Fig. 1.

In Fig. 3 wird schematisch das Erfassen der Kennzeichnung (13) des erfindungsgemäßen Gefäßes (11) mit enthaltener Probe (1) dargestellt. Der Arzt oder Operateur liest die Kennzeichnung (13) mit dem zweidimensionalen Bild (7) in Form eines QR-Codes auf der Außenseite (12) des Gefäßes (11) mit Hilfe einer App (21) auf einem digitalen Endgerät/Computer (22) aus und übermittelt die ausgelesenen Daten mittels Übertragung (19) in eine Cloud (20) und speichert sie dort in einem Datenspeicherprogramm (9) einer digitalen Plattform (10). Mit Hilfe der App (21) kann der Arzt oder Operateur (16) auch jederzeit die Übereinstimmung des zweidimensionalen Bildes (7) der Kennzeichnung (13) und des zweidimensionalen Bildes (7) des dreidimensionalen Körpers (2) innerhalb des Gefäßes (11) überprüfen. Fig. 3 zeigt eine bi-direktionale Kommunikation, d.h. es kann auch in einem ersten Schritt nach der Erfassung des zweidimensionalen Bildes (7) am Probengefäß (11) zunächst ein bereits (in der Cloud (20)) mit dem zweidimensionalen Bild (7) versehener Anforderungsschein heruntergeladen werden; dieser kann dann wahlweise (i) klassisch ausgedruckt werden und in Papierform mit der Probe an den Pathologen verschickt werden, (ii) halb-klassisch nach dem manuellen Ausfüllen als Scan in die Cloud hochgeladen werden, von wo er später durch z.B. einen Pathologen jederzeit wieder abgerufen werden kann (dies ist ein Vorteil, wenn der Papierschein verloren gehen würde oder unleserlich wäre; oder (iii) direkt am PC digital ausgefüllt werden, und später nur bei Bedarf von einem der in den Prozess involvierten Parteien auf Papier ausgedruckt werden.

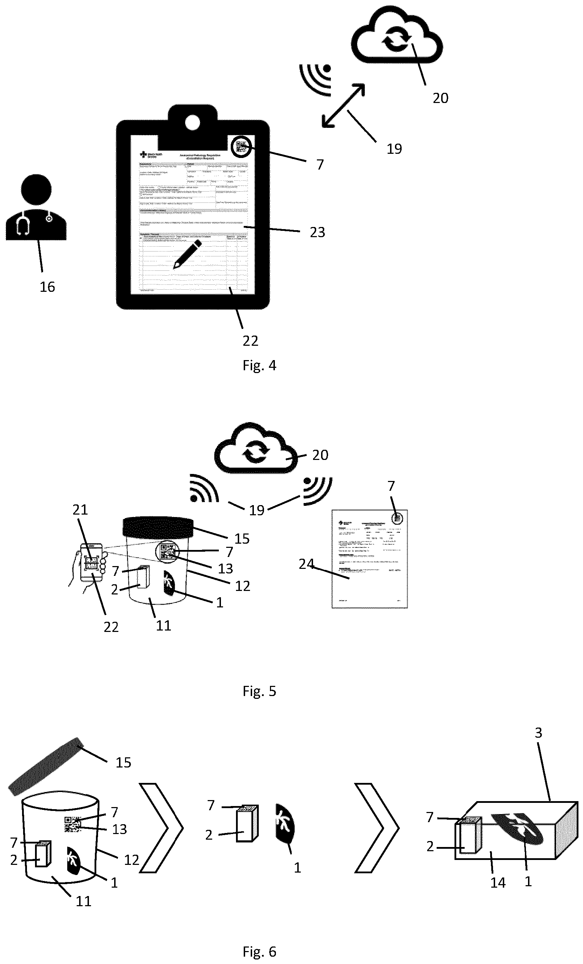

In Fig. 4 wird schematisch die Übertragung eines digitalen Begleitscheines (23) in eine Cloud (20) gezeigt. Der Arzt oder Operateur (16) erstellt auf seinem digitalen Endgerät bzw. Computer (22) einen digitalen Begleitschein (23) auf dem nun ebenfalls das zweidimensionale Bild (7) in Form des QR-Codes abgebildet ist, wobei das zweidimensionale Bild (7) auf dem digitalen Begleitschein (23) dem zweidimensionalen Bild (7) des dreidimensionalen Körpers (2) innerhalb des Gefäßes (11) und dem zweidimensionalen Bild (7) der Kennzeichnung (13) auf der Außenseite (12) des Gefäßes (11) entspricht. Den erstellten digitalen Begleitschein (23) übermittelt der Arzt oder Operateur (16) mittels Übertragung (19) in die Cloud (20) und speichert ihn dort in einem Datenspeicherprogramm (9) einer digitalen Plattform (10).

In Fig. 5 wird schematisch der Erfassungsvorgang der Kennzeichnung (13) eines erfindungsgemäßen Gefäßes (11) zur Vorbereitung der Durchführung eines erfindungsgemäßen Verfahrens dargestellt. Abgebildet ist das erfindungsgemäße Gefäß (11) wie es bei der Stelle, typischerweise dem pathologischen Labor, ankommt, das das erfindungsgemäße Verfahren durchführt. Das Gefäß (11) ist mit seinem Deckel verschlossen. Im pathologischen Labor wird die Kennzeichnung (13) über ein digitales Endgerät bzw. Computer (22) erfasst und durch Übertragung (19) mit dem Datenspeicherprogramm (9) der digitalen Plattform (10) in der Cloud (20) abgeglichen. Mittels Übertragung (19) aus dem Datenspeicherprogramm (9) der digitalen Plattform (10) in der Cloud (20) erhält das pathologische Labor Zugang zu dem digitalen Begleitschein (23) und druckt diesen für das weitere Verfahren in Form eines händischen Begleitscheins (24), auf dem ebenfalls das zweidimensionale Bild (7) in Form des QR-Codes abgebildet ist, aus.

In Fig. 6 wird schematisch die weitere Prozessierung der Probe (1) und des dreidimensionalen Körpers (2) aus dem erfindungsgemäßen Gefäß (11) enthaltend diese Probe (1) und den dreidimensionaler Körper (2), der so ausgestaltet ist, dass ein zweidimensionales Bild (7) in Form eines QR-Code in ihn eingebracht ist, wobei die Kennzeichnung (13) auf der Außenseite (12) des Gefäßes (11) ebenfalls ein zweidimensionales Bild (7) in Form eines QR-Codes zeigt, das dem zweidimensionalen Bild (7) des dreidimensionalen Körpers (2) innerhalb des Gefäßes (11) entspricht, gezeigt. Zunächst wird im pathologischen Labor der Deckel (15) der Gefäßes (11) geöffnet und die Probe (1) und der dreidimensionale Körper (2) mit zweidimensionalem Bild (7) in Form des QR-Codes herausgeholt. Probe (1) und der dreidimensionale Körper (2) werden in einer Kapsel befüllt mit einem Einbettmedium (14) (nicht gezeigt) so zueinander ausgerichtet, dass der dreidimensionale Körper (2) in vertikaler oder horizontaler Ausrichtung im Verhältnis zu der Probe (1) vorliegt, wobei der dreidimensionale Körper (2) in der Kapsel auf seiner Standfläche steht. Im nächsten Schritt erfolgt das Aushärten des Einbettmediums (14) zu einem Block (3) wie er rechts in Fig. 6 abgebildet ist.

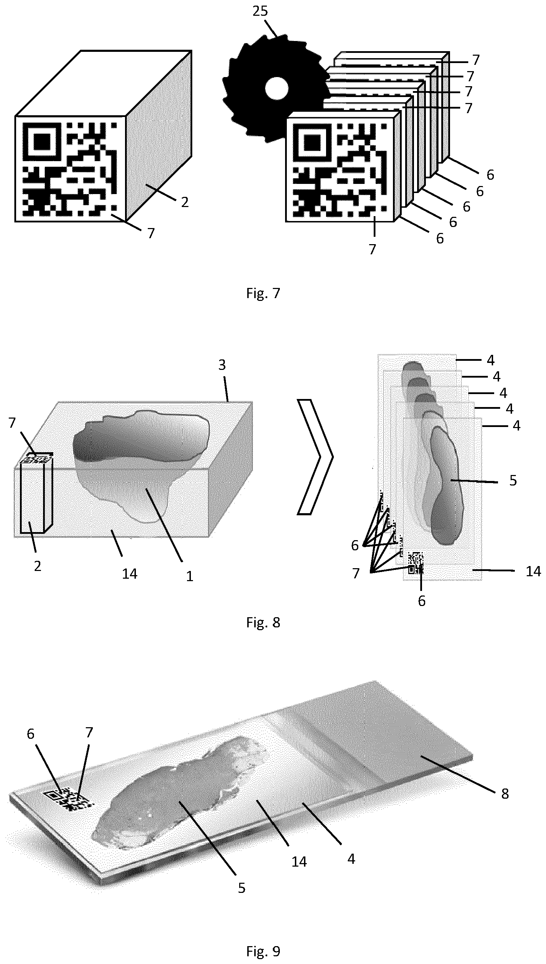

In Fig. 7 wird schematisch der dreidimensionale Körper (2) mit dem zweidimensionalen Bild (7) in Form des QR-Codes gezeigt sowie dessen Zerschneidung im Sinne der Erfindung. Im Sinne der Erfindung wird der dreidimensionale Körper (2) mit dem zweidimensionalen Bild (7) in Form des QR-Codes mit Hilfe eines Mikrotoms (25) so geschnitten, dass in Aufsicht auf einen Schnitt des dreidimensionalen Körpers (6) das zweidimensionale Bild (7) in Form des QR-Codes zu sehen ist.

In Fig. 8 wird schematisch die weitere Prozessierung gemäß Schritt (c) des erfindungsgemäßen Verfahrens des in Schritt (b) erhaltenen Blockes (3) gezeigt. Entsprechend der in Fig. 7 abgebildeten Schneiderichtung in Bezug auf den dreidimensionalen Körper (2) wird auch der Block (3) in Fig. 8, der in dem ausgehärteten Einbettmedium (14) den dreidimensionalen Körper (2) mit dem zweidimensionalen Bild (7) in Form des QR-Codes und die Probe (1) enthält, mit Hilfe eines Mikrotoms (25) geschnitten. Erhalten wird bei jedem Schneidevorgang jeweils ein Schnitt (4) enthaltend einen Schnitt der Probe (5) und einen Schnitt des dreidimensionalen Körpers (6), wobei der Schnitt des dreidimensionalen Körpers (6), das zweidimensionale Bild (7) in Form des QR-Codes abbildet, und wobei der Schnitt der Probe (5) und der Schnitt des dreidimensionalen Körpers (6) über das ausgehärtete Einbettmedium (14), verbunden sind.

In Fig. 9 wird schematisch ein erfindungsgemäßer Schnitt (4) mit dem Schnitt einer Probe (5) und dem Schnitt des dreidimensionalen Körpers (6) auf einem Träger (8), nämlich einem Objektträger, gezeigt, wobei der Schnitt des dreidimensionalen Körpers (6) das zweidimensionale Bild (7) in Form des QR-Codes abbildet, und wobei der Schnitt der Probe (5) und der Schnitt des dreidimensionalen Körpers (6) über das ausgehärtete Einbettmedium (14) verbunden sind.

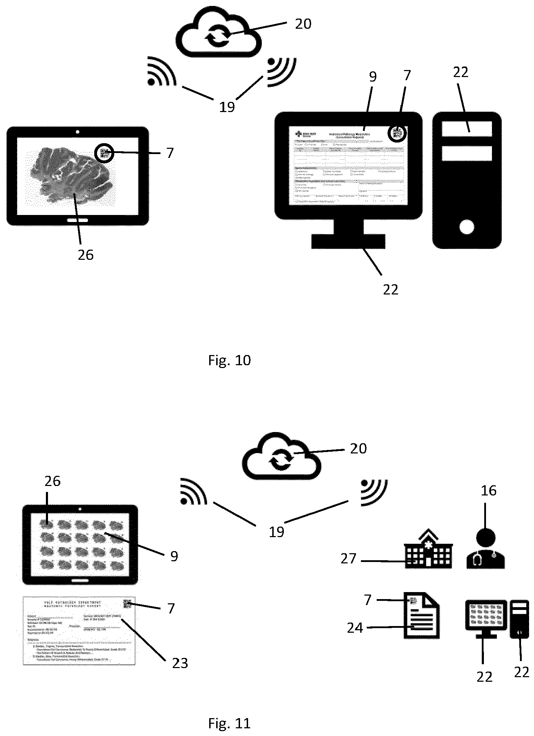

In Fig. 10 wird schematisch die elektronische Erfassung des erfindungsgemäßen Schnittes (4) und dessen Speicherung durch Übertragung (19) in ein Datenspeicherprogramm (9) auf einer digitalen Plattform (10) in einer Cloud (20) gezeigt. Der Objektträger, wie er gemäß Fig. 9 erhalten wird, wird bei dem erfindungsgemäßen Verfahren gemäß Schritt e) untersucht. Fig. 10 zeigt das digitale Bild (26), das von dem erfindungsgemäßen Schnitt (4) über ein digital arbeitendes Mikroskop erstellt wird. Das digitale Bild (26) enthält wieder das entsprechende zweidimensionale Bild (7) in Form des QR-Codes. Die Auswertungsergebnisse aus der mikroskopischen Untersuchung werden durch die Übertragung(19) in das Datenspeicherprogramm (9) auf der digitalen Plattform (10) in der Cloud (20) mit den dort schon hinterlegten Daten verbunden. Die Ergebnisse können in den dort hinterlegten digitalen Begleitschein (24) mit dem entsprechenden zweidimensionalen Bild (7) in Form des QR-Codes eingetragen werden. Sie sind durch Übertragung (19) aus der Cloud (20) mit einem digitalen Endgerät/Computer (22) jederzeit abrufbar.

In Fig. 11 wird schematisch die Übertragung (19) von Informationen aus dem Datenspeicherprogramm (9) auf der digitalen Plattform (10) in der Cloud (20) an Dritte gezeigt. In dem Datenspeicherprogramm (9) auf der digitalen Plattform (10) in der Cloud (20) können für viele Vorgänge jeweils der individuelle digitale Begleitschein (23) und/oder das individuelle digitale Bild (26) erstellt werden, wobei die Zuordnung immer über die Kennzeichnung (13) und das zweidimensionale Bild (7) erfolgt. Durch die Beigabe des dreidimensionalen Körpers (2) zur Probe und der Fortführung der Kennzeichnung (13) über das zweidimensionale Bild (7) aus dem dreidimensionalen Körper (2) im erfindungsgemäßen Schnitt (4) erfolgt die korrekte Zuordnung zu der Herkunft der Probe (1) und Verwechslungen werden verhindert. Durch die Übertragung (19) der Informationen in das Datenspeicherprogramm (9) auf der digitalen Plattform (10) in der Cloud (20) und deren Abruf können Dritte, wie ein Arzt oder Operateur (16) oder ein Krankenhaus (30), Zugang zu den Daten erhalten ohne der Gefahr einer Verwechslung. Die Daten können über ein digitales Endgerät/Computer (22) abgerufen werden. Auch können die Daten durch den Ausdruck eines digitalen Begleitscheins (23) in Form eines händischen Begleitscheins (24) einem Arzt/Operateur (16) vorgelegt werden.

### Beurteilung der Erfindung

Zusammenfassend zeigen die erfindungsgemäßen Ausführungsformen, dass bei dem beschriebenen erfindungsgemäßen Verfahren und den weiter beschriebenen Erfindungsgegenständen nicht - ggf. nur - das Umfeld (wie z.B. die Kapsel oder das Gefäß) der Probe, sondern die Probe bzw. der Probenschnitt selbst gekennzeichnet bzw. markiert wird.

Der Nutzen des hier beschriebenen erfindungsgemäßen Verfahrens und der weiter beschriebenen Erfindungsgegenstände besteht darin, Verwechslungsmöglichkeiten, welche an verschiedenen Punkten der Bearbeitung von (Gewebe-)Proben bestehen, auszuschalten. Unter der regelmäßig zutreffenden Annahme, dass die histo-pathologische Diagnose in der Regel eine wesentliche Basis für die Entscheidung der vorzunehmenden therapeutischen Maßnahmen ist, wird so sichergestellt, dass der Patient die zu ihm passende Therapie erhält. In der beschriebenen Anwendung des erfindungsgemäßen Verfahrens und der weiter beschriebenen Erfindungsgegenstände wird die Kennzeichnung, vorzugsweise der Barcode, bevorzugt der QR-Code genutzt, um als zentraler Ankerpunkt auf einer digitalen Plattform, z.B. in einer Cloud, sämtliche Informationen zu diesem Patienten und seiner Erkrankung oder seinen Erkrankungen zu sammeln, zusammenzufassen, und den relevanten Nutzergruppen zur Verfügung zu stellen.

Der "digitale Begleitschein" kann ggf. auch als "Pathology Report" bezeichnet werden, also den Befund, den ein Pathologe nach Begutachtung der Probe erstellt und in dem er die Frage des einsenden Arztes zur Probe beantwortet. Es bestehen die Möglichkeiten, den Befund auf Papier auszufüllen, (ii) das Papier zu scannen und hochzuladen, oder (iii) direkt online auszufüllen, wobei (ii) und (iii) den Vorteil bieten, dass es dem einsendenden Arzt auf diese Weise sofort zur Verfügung steht, und alle Dokumente (Anforderungsbogen des Einsenders, Schnittbilder, Befundung durch Pathologen, etc.) an einem zentralen Ort in der Cloud zusammengestellt sind, über den einheitlichen Code in Verbindung stehen, und so weiteren betroffenen Parteien, z. B. Operateuren im Krankenhaus, lückenlos zur Verfügung stehen.

**Bezugszeichenliste**

| | | | |
|---|---|---|---|
| 1 | Probe | 20 | Cloud |
| 2 | dreidimensionaler Körper | 21 | App |
| 3 | Block | 22 | digitales Endgerät/Computer |
| 4 | Schnitt | 23 | digitaler Begleitschein |
| 5 | Schnitt der Probe | 24 | Begleitschein |
| 6 | Schnitt des dreidimensionalen Körpers | 25 | Mikrotom |
| 7 | Bild | 26 | digitales Bild |
| 8 | Träger | 27 | Krankenhaus |
| 9 | Datenspeicherprogramm | | |
| 10 | digitale Plattform | | |
| 11 | Gefäß | | |
| 12 | Außenseite | | |
| 13 | Kennzeichnung | | |
| 14 | ausgehärtetes Einbettmedium | | |
| 15 | Deckel | | |
| 16 | Arzt/Operateur | | |
| 17 | Entnahmegerät | | |
| 18 | Gewebe | | |
| 19 | Übertragung | | |

## Patentansprüche

1. Verfahren zur Probenverarbeitung und/oder Probenkennzeichnung, vorzugsweise zur Probenverarbeitung und/oder Probenkennzeichnung in der Medizin, bevorzugt zur Probenverarbeitung und/oder Probenkennzeichnung von histologischen Gewebeproben, umfassend die Schritte
(a) Einbetten einer Probe (1), vorzugsweise einer Gewebeprobe, und eines dreidimensionalen Körpers (2) in ein Einbettmedium, vorzugsweise Paraffin oder Methylmethacrylat,
(b) Aushärten des Einbettmediums zu einem Block (3) und
(c) Durchführen eines Schnittes (4) von dem Block (3), so dass der Schnitt (4) in Aufsicht einen Schnitt der Probe (5) und einen Schnitt des dreidimensionalen Körpers (6) in Form eines zweidimensionalen Bildes (7) enthält.

2. Verfahren nach Anspruch 1, wobei der dreidimensionale Körper (2) so ausgestaltet ist, dass ein zweidimensionales Bild (7), vorzugsweise ein Barcode, bevorzugt ein QR-Code, in den dreidimensionalen Körper (2) eingebracht ist.

3. Verfahren nach zumindest einem der vorhergehenden Ansprüche, umfassend die zusätzlichen Schritte
(d) Aufziehen des Schnittes (4) aus Schritt (c) auf einen Träger (8), vorzugsweise Objektträger, und
(e) Untersuchung, vorzugsweise mikroskopische Untersuchung, des Schnittes (4) auf dem Träger (8), vorzugsweise Objektträger.

4. Verfahren nach zumindest einem der vorhergehenden Ansprüche, wobei das zweidimensionale Bild (7), vorzugsweise der Barcode, bevorzugt der QR-Code, des Schnittes (4) in ein Datenspeicherprogramm (9) eingelesen und vorzugsweise gespeichert wird.

5. Verfahren nach Anspruch 4, wobei das Einlesen über eine App (21) erfolgt und/oder wobei die Speicherung auf einer digitalen Plattform (10), vorzugsweise in einer Cloud (20), erfolgt.

6. Gefäß (11) für die Aufnahme einer Probe (1), vorzugsweise einer Gewebeprobe, enthaltend einen dreidimensionalen Körper (2), der so ausgestaltet ist, dass ein zweidimensionales Bild (7), vorzugsweise ein Barcode, bevorzugt ein QR-Code, in den dreidimensionalen Körper (2) eingebracht ist.

7. Gefäß (11) nach Anspruch 6, wobei das Gefäß (11) auf seiner Außenseite (12) eine Kennzeichnung (13) besitzt, die dem zweidimensionalen Bild (7), vorzugsweise dem Barcode, bevorzugt dem QR-Code, des dreidimensionalen Körpers (2) innerhalb des Gefäßes (11) entspricht.

8. Gefäß (11) nach Anspruch 7, wobei die Kennzeichnung (13) auf der Außenseite (12) des Gefäßes (11) in zweifacher Ausfertigung vorliegt.

9. Gefäß (11) nach Anspruch 7 oder 8, wobei die oder mindestens eine Kennzeichnung (13) in Form eines abziehbaren Etiketts, vorzugsweise in Form eines abziehbaren und bevorzugt erneut klebfähigen Etiketts, vorliegt.

10. Ausgehärtetes Einbettmedium (14) enthaltend eine Probe (1), vorzugsweise eine Gewebeprobe, und einen dreidimensionalen Körper (2) in vertikaler oder horizontaler Ausrichtung im Verhältnis zu der Probe (1), wobei der dreidimensionale Körper (2) so ausgestaltet ist, dass ein zweidimensionales Bild (7), vorzugsweise ein Barcode, bevorzugt ein QR-Code, in den dreidimensionalen Körper (2) eingebracht ist.

11. Ausgehärtetes Einbettmedium (14) nach Anspruch 10, wobei es sich bei dem ausgehärteten Einbettmedium (14) um Paraffin oder Methylmethacrylat handelt.

12. Verwendung eines dreidimensionalen Körpers (2) zur Probenkennzeichnung, vorzugsweise zur Probenkennzeichnung einer Gewebeprobe, bevorzugt in einem Verfahren nach einem der Ansprüche 1 bis 5.

13. Verwendung nach Anspruch 12, wobei der dreidimensionale Körper (2) so ausgestaltet ist, dass ein zweidimensionales Bild (7), vorzugsweise ein Barcode, bevorzugt ein QR-Code, in den dreidimensionalen Körper (2) eingebracht ist.

14. Verwendung nach zumindest einem der Ansprüche 12 oder 13, wobei die Probenkennzeichnung dadurch erfolgt, dass ein Schnitt des dreidimensionalen Körpers (6) in einem Schnitt (4), enthaltend weiter einen Schnitt einer Probe (5), vorzugsweise einer Gewebeprobe, vorliegt, wobei der Schnitt des dreidimensionalen Körpers (6), ein zweidimensionales Bild (7) abbildet, vorzugsweise einen Barcode, bevorzugt einen QR-Code, wobei dabei vorzugsweise der Schnitt der Probe (5) und der Schnitt des dreidimensionalen Körpers (6) über ein ausgehärtetes Einbettmedium (14), vorzugsweise über eine Paraffinumgebung, verbunden sind, wobei der Schnitt (4) vorzugsweise über ein erfindungsgemäßes Verfahren erhalten werden kann.

15. Schnitt (4) enthaltend einen Schnitt einer Probe (5), vorzugsweise einer Gewebeprobe, und einen Schnitt eines dreidimensionalen Körpers (6), wobei der Schnitt des dreidimensionalen Körpers (6), ein zweidimensionales Bild (7) abbildet, vorzugsweise einen Barcode, bevorzugt einen QR-Code, wobei der Schnitt der Probe (5) und der Schnitt des dreidimensionalen Körpers (6) über ein ausgehärtetes Einbettmedium (14), vorzugsweise über eine Paraffinumgebung, verbunden sind, wobei der Schnitt (4) vorzugsweise erhalten worden ist über ein Verfahren gemäß zumindest einem der Ansprüche 1 bis 5.
